Europäisches Patentamt

European Patent Office

Office européen des brevets

(11) Veröffentlichungsnummer: **0 534 146 A2**

# EUROPÄISCHE PATENTANMELDUNG

(21) Anmeldenummer: **92114395.4**

(51) Int. Cl.5: **H04B 10/14**

(22) Anmeldetag: **24.08.92**

(30) Priorität: **27.09.91 DE 4132301**

(43) Veröffentlichungstag der Anmeldung:
**31.03.93 Patentblatt 93/13**

(84) Benannte Vertragsstaaten:
**DE FR GB IT NL**

(71) Anmelder: **SIEMENS AKTIENGESELLSCHAFT**
**Wittelsbacherplatz 2**
**W-8000 München 2(DE)**

(72) Erfinder: **Noll, Bernd, Dipl.-Ing.**
**Agnes-Bernauer-Strasse 26**
**W-8000 München 21(DE)**
Erfinder: **Auracher, Franz, Dr.**
**Eichenstrasse 26**
**W-8021 Baierbrunn(DE)**
Erfinder: **Ebberg Alfred, Dr.**
**Niemöller-Allee 18**
**W-8000 München 83(DE)**

(54) **Optischer Kammgenerator.**

(57) Zur Reduzierung von Leistungsschwankungen der Spektrallinien eines Kammgenerators mit einem ringförmig geschlossenen Wellenleiter (2) und einem im Wellenleiter (2) angeordneten Seitenbandmodulator (3) erzeugt der Seitenbandmodulator (3), nur Seitenbänder mit gleichem Vorzeichen der Frequenzverschiebung ($f_1$) und der Betrag ($|f_1|$) der Frequenzverschiebung ($f_1$) ist derart gewählt, daß das Produkt ($|f_1| . \tau$) aus diesem Betrag ($|f_1|$) und der Umlaufzeit ($\tau$) des Lichts im Wellenleiter (2) gleich $\pi/2 + k\pi$ ist, wobei k eine beliebig wählbare ganze Zahl bedeutet, und/oder erzeugt der Seitenbandmodulator (3) Seitenbänder mit positiver und negativer Frequenzverschiebung ($f_1$, $-f_1$) und der Betrag ($|f_1|$) der Frequenzverschiebung $f_1$, $-f_1$) ist derart gewählt, daß das Produkt ($|f_1| . \tau$) aus diesem Betrag ($|f_1|$) und der Umlaufzeit ($\tau$) des Lichts im Wellenleiter (2) gleich $\pi/4 + k\pi$ ist, wobei k eine beliebig wählbare ganze Zahl ist.

FIG 1

EP 0 534 146 A2

Die Erfindung betrifft einen optischen Kammgenerator nach dem Oberbegriff des Patentanspruchs 1.

Zur Stabilisierung der Sendelaser eines kohärenten optischen Vielkanalübertragungssystems wird ein optischer Kammgenerator benötigt, der aus dem Licht eines Referenzlasers einen Satz äquidistanter Referenzfrequenzen erzeugt, so daß je ein Sendelaser an je eine Referenzfrequenz angebunden werden kann.

Eine mögliche Realisierung eines solchen Kammgenerators ist in Electron. Lett. 26 (1990) S. 28-30 beschrieben. Bei diesem Kammgenerator wird das Licht des Referenzlasers über einen Faserkoppler in einen ringförmig geschlossenen Faser-Lichtwellenleiter eingespeist. Ein Einseitenbandmodulator versetzt die Frequenz des Lichts um eine bestimmte Frequenzverschiebung. Ein Teil des Lichts wird durch den Faserkoppler aus dem Wellenleiter ausgekoppelt, der Rest durchläuft den Ring abermals, wird nochmals frequenzversetzt usw.. Werden die Umlaufverluste durch einen optischen Verstärker kompensiert, so hängt die erzielbare Breite des Kammspektrums nur vom Frequenzgang des Einseitenbandmodulators, des optischen Verstärkers und des Faserkopplers ab. Ein optischer Isolator verhindert lediglich die Ausbreitung des Lichts im Wellenleiter in einer ungewünschten Umlaufrichtung.

Einseitenbandmodualtoren mit hoher Klirrdämpfung von beispielsweise mehr als 30 dB existieren bisher nur als akustooptische Modulatoren, beispielsweise in Form von Bragg-Zellen, bei denen jedoch die maximale Betriebsfrequenz nur wenige GHz beträgt. Darüberhinaus sinkt der Konversionswirkungsgrad, definiert durch das Verhältnis zwischen der Amplitude des um die bestimmte Frequenzverschiebung frequenzverschobenen Signals zur Amplitude des Lichts vor dem Einseitenbandmodulator, bei hohen Frequenzen ab und beträgt nur noch wenige Prozent für Frequenzen von mehr als 1 GHz.

Elektrooptische Einseitenbandmodulatoren erreichen mühelos Betriebsfrequenzen von mehr als 10 GHz, jedoch ist eine Klirrdämpfung von mehr als 30 dB bei gleichzeitig hohem Konversionswirkungsgrad von mehr als 0,9 nur für extrem kleine Fertigungsstreuungen zu erreichen.

Erzeugt der Einseitenbandmodulator mehrere Modulationsseitenbänder, so kommt es im ringförmig geschlossenen Wellenleiter zur Überlagerung von Teilwellen derselben Frequenz aus verschiedenen Umlaufzyklen. Abhängig von der Anregung der unerwünschten Modulationsseitenbänder, der Phasenverschiebung zwischen den einzelnen Teilwellen, der die Frequenzverschiebung bestimmenden Modulationsfrequenz des Einseitenbandmodulators sowie der für einen Umlauf im Wellenleiter benötigten Umlaufzeit sind die Leistungen in den einzelnen Spektrallinien sehr unterschiedlich, es können einzelne Spektrallinien verschwinden oder der ringförmig geschlossene Wellenleiter kann sogar anschwingen.

Das Problem kann dadurch gelöst werden, daß der Referenzlaser gepulst wird (siehe z.B. EFOC/LAN Konferenzband, 1990, Seiten 314-319), wobei die Impulsdauer nicht größer als die Umlaufzeit und der Impulsabstand so groß gewählt werden soll, daß im Ring keine Interferenz von Licht aus benachbarten Impulsen stattfindet. Die mittlere Leistung in jeder Spektrallinie reduziert sich jedoch entsprechend dem Tastverhältnis, so daß der zur sicheren Frequenzregelung benötigte Signal-Rauschabstand unter Umständen nicht mehr erreicht werden kann.

Der im Anspruch 1 angegebenen Erfindung liegt die Aufgabe zugrunde, einen anderen Weg aufzuzeigen, auf dem Leistungsschwankungen der Spektrallinien reduziert werden können.

Durch die Erfindung kann der Kammgenerator vorteilhafterweise mit nichtidealem Einseitenbandmodulator kontinuierlich betrieben werden, ohne daß die Leistungsschwankungen der Spektrallinien des Kammspektrums ein bestimmtes Maß übersteigen.

Der Erfindung liegt die Erkenntnis zugrunde, daß das Kammspektrum empfindlich auf Änderungen der Phase des Lichts bei einem Umlauf im Wellenleiter reagiert. Diese Phase sollte daher möglichst konstant gehalten werden. Die Empfindlichkeit des Kammspektrums auf Änderungen der Phase des Lichts bei einem Umlauf im Wellenleiter wird von dem Produkt aus der Frequenzverschiebung und der Umlaufzeit des Lichts im Wellenleiter bestimmt. Wird dieses Produkt gleich $k.\pi$ gewählt, wobei k eine beliebig wählbare ganze Zahl ist, bewirken Änderungen der Phase des Lichts bei einem Umlauf im Wellenleiter starke Amplitudenschwankungen einer Spektrallinie, die um so stärker sind, je weiter entfernt die Frequenz dieser Spektrallinie von der Referenzfrequenz liegt. Diese Amplitudenschwankungen werden minimal, wenn der Kammgenerator nach Maßgabe des Anspruchs 1 realisiert wird, wobei die dort angegebenen alternativen Maßnahmen auch gleichzeitig verwirklicht sein können.

Vorteilhafterweise wird die Länge des ringförmig geschlossenen Wellenleiters nach Maßgabe des Anspruchs 2 gewählt.

Zusätzlich kann gezielt die Phase des Lichts bei einem Umlauf verändert werden, wenn der Kammgenerator gemäß Anspruch 3 realisiert wird. Durch die dort angegebene gesonderte Modulation kann die optische Länge des ringförmig geschlossenen Wellenleiters vorteilhafterweise so schnell moduliert werden, daß die Amplitudenschwankungen von der Regelschaltung nicht mehr wahrgenommen werden.

Die gesonderte Modulation kann nach Anspruch 4 mit Hilfe eines Phasenmodulators, der vorzugsweise sinusförmig angesteuert wird, erreicht werden. Die Frequenz dieser Phasenmodulation sollte größer als die Bandbreite der Frequenzregelung, aber deutlich kleiner als die Linienbreite der von der kohärenten Referenzlichtquelle erzeugten Spektrallinie sein. Der Phasenhub der zusätzlichen Frequenzmodulation sollte in der Größenordnung von $\pi/2$ liegen.

Der gleiche Effekt wird erzielt, wenn gemäß Anspruch 5 die kohärente Referenzlichtquelle schwach frequenzmoduliert wird, wobei für Frequenz und Stärke dieser gesonderten Frequenzmodulation analoge Bedingungen wie bei der gesonderten Phasenmodulation gelten.

Die Erfindung wird anhand der Figuren in der nachfolgenden Beschreibung beispielhaft näher erläutert. Es zeigen:

Figur 1     ein Ausführungsbeispiel eines erfindungsgemäßen Kammgenerators,

Figur 2     eine Modifikation des Kammgenerators nach Figur 1, bei dem im Wellenleiter ein Phasenmodulator angeordnet ist,

Figur 3     eine Modifikation des Kammgenerators nach Figur 1, bei dem die Referenzlichtquelle frequenzmodulierbar ist, und

Figur 4     ein Anwendungsbeispiel eines erfindungsgemäßen Kammgenerators auf ein kohärent optisches Vielkanalübertragungssystem.

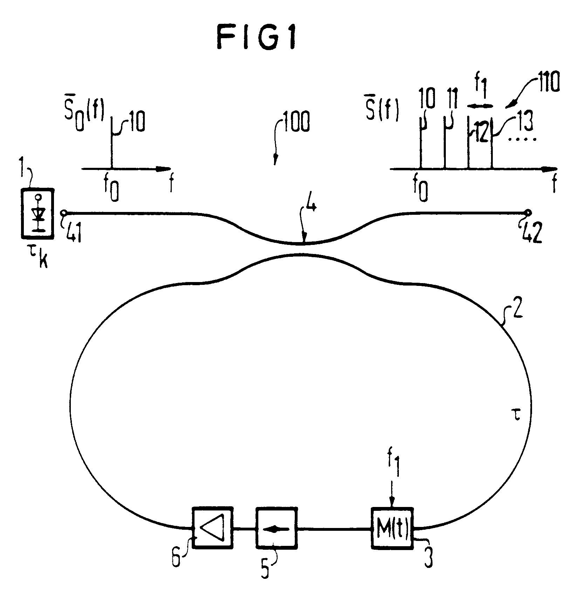

Bei dem Kammgenerator 100 nach Figur 1 erzeugt die kohärent optische Referenzlichtquelle 1 in Form eines Referenzlasers mit der Kohärenzzeit $\tau_k$ kohärentes Licht, dessen über der Frequenz f aufgetragenes Frequenzspektrum eine einzige Spektrallinie 10 bei der optischen Referenzfrequenz $f_0$ aufweist. Die mittlere Leistung dieser Spektrallinie 10 ist mit $S_0(f)$ bezeichnet.

Das Licht dieser Spektrallinie 10 wird in einen optischen 3dB-Faserrichtkoppler über ein Eingangstor 41 dieses Kopplers 4 eingekoppelt und tritt im Koppler 4 in dem ringförmig geschlossenen optischen Faserwellenleiter 2 ein, in welchem das eingekoppelte Licht im Uhrzeigersinn mit der Umlaufzeit $\tau$ umläuft. Ein Teil des umlaufenden Lichts wird durch den Koppler 4 aus dem ringförmig geschlossenen Wellenleiter 2 zu einem Ausgangstor 42 dieses Kopplers 4 ausgekoppelt, der Rest läuft weiter im Wellenleiter 2 um.

Im Wellenleiter 2 ist der Einseitenbandmodulator 3 angeordnet, der das im Wellenleiter umlaufende Licht um die optische Frequenzverschiebung $f_1$ frequenzverschiebt. Diese Frequenzverschiebung $f_1$

erfolgt bei jedem durch die Umlaufzeit $\tau$ bestimmten Umlaufzyklus. Das in den Wellenleiter 2 eingekoppelte Licht der Referenzfrequenz $f_0$ wird im Einseitenbandmodulator 3 um die Frequenzverschiebung $f_1$ frequenzverschoben, so daß das aus dem Einseitenbandmodulator 3 austretende und im Wellenleiter 2 weiterlaufende Licht eine Frequenz von $f_0 + f_1$ hat. Trifft dieses im Wellenleiter 2 umlaufende Licht der Frequenz $f_0 + f_1$ wieder auf den Einseitenbandmodulator 3, wird dieses Licht im Modulator 3 wieder um $f_1$ frequenzverschoben, so daß das aus dem Modulator 3 austretende Licht die Frequenz $f_0 + 2f_1$ aufweist. Nach n Umläufen hat das umlaufende Licht die Frequenz $f_0 + nf_1$, wobei n eine beliebige natürliche Zahl bedeutet. Das Ergebnis ist, daß am Ausgangstor 42 Licht mit einem Kammspektrum 110 austritt, dessen Spektrallinien 10, 11, 12, 13, ... der Reihe nach die Frequenzen $f_0$, $f_0 + f_1$, $f_0 + 2f_1$, $f_0 + 3f_1$ ...aufweisen. Die mittlere Leistung jeder dieser Spektrallinien 10, 11, 12, 13, ... ist mit S(f) bezeichnet.

Im Wellenleiter 2 ist neben dem Einseitenbandmodulator 3 ein optischer Isolator 5 und ein optischer Verstärker 6 angeordnet, deren Sinn und Zweck eingangs bereits beschrieben worden ist.

Die Länge des ringförmig geschlossenen Wellenleiters 2 ist so groß gewählt, daß die Umlaufzeit $\tau$ des im Wellenleiter 2 umlaufenden Lichts größer als die bestimmte Kohärenzzeit $\tau_k$ der kohärenten Referenzlichtquelle 1 ist.

Der Einseitenbandmodulator 3 ist so ausgebildet, daß er nur Seitenbänder mit gleichem Vorzeichen der Frequenzverschiebung $f_1$ erzeugt, und daß der Betrag $|f_1|$ der Frequenzverschiebung $f_1$ derart gewählt ist, daß $|f_1| \cdot \tau = \pi 2 + k\pi$ gilt, wobei k eine beliebig wählbare ganze Zahl bedeutet, und/oder er ist so ausgebildet, daß er Seitenbänder mit positiver und negativer Frequenzverschiebung $+f_1$ und $-f_1$ erzeugt, und daß der Betrag $|f_1|$ der Frequenzverschiebung $+f_1$ $-f_1$ derart gewählt ist, daß $|f_1| \cdot \tau = \pi/4 + k\pi$ gilt, wobei k eine beliebig wählbare ganze Zahl ist.

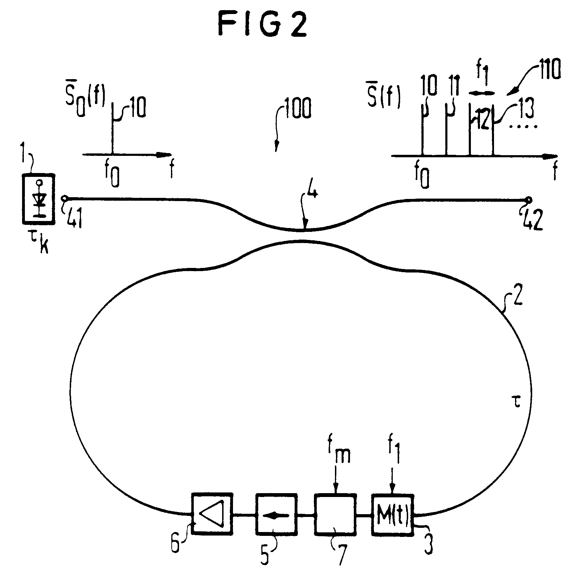

Die in Figur 2 gezeigte Modifikation des Kammgenerators 100 nach Figur 1 unterscheidet sich von dem Kammgenerator 100 nach Figur 1 lediglich dadurch, daß im ringförmig geschlossenen Wellenleiter 2 ein Phasenmodulator 7 angeordnet ist, mit welchem die Frequenz des im Wellenleiter umlaufenden Lichts gesondert phasenmodulierbar ist. Vorzugsweise wird der Phasenmodulator 7 sinusförmig angesteuert. Die Frequenz $f_m$ dieser gesonderten Modulation sollte größer als die Bandbreite der Frequenzregelung, aber deutlich kleiner als die Linienbreite der Spektrallinie 10 der Referenzlichtquelle 1 sein. Der Phasenhub sollte in der Größe von $\pm \pi/2$ liegen.

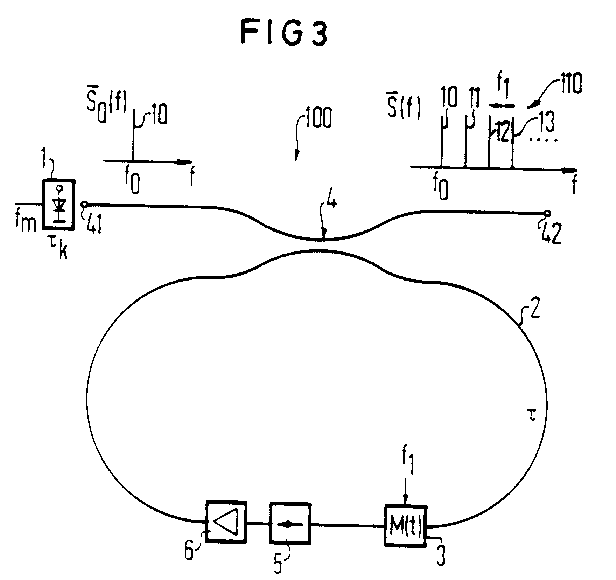

Mit der in Figur 3 gezeigten Modifikation des Kammgenerators 100 nach Figur 1 wird der gleiche Effekt erreicht, wie mit der Modifikation nach Figur 2. Der Kammgenerator 100 nach Figur 3 unterscheidet sich von dem Kammgenerator 100 nach Figur 1 und von dem Kammgenerator nach Figur 2 dadurch, daß die kohärente Referenzlichtquelle 1 mit der Frequenz $f_m$ der gesonderten Modulation frequenzmodulierbar ist, wodurch der Phasenmodulator 7 der Modifikation nach Figur 2 entfallen kann. Die Lichtquelle 1 sollte schwach frequenzmoduliert werden, wobei für Frequenz und Stärke dieser Frequenzmodulation analoge Bedingungen wie bei der Phasenmodulation mit dem Phasenmodulator 7 der Ausführungsform nach Figur 2 gelten.

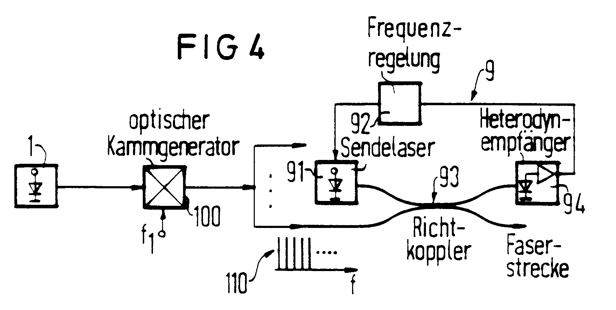

Bei dem in Figur 4 gezeigten Anwendungsbeispiel des erfindungsgemäßen Kammgenerators 100 auf ein kohärent optisches Vielkanalübertragungssystem 9 ist je ein Spektrallinie des vom erfindungsgemäßen Kammgenerator 100 erzeugten Kammspektrums 110 je einem Heterodynempfänger 94 zugeordnet. Das Licht dieser Spektrallinie regt einen diesem Heterodynempfänger allein zugeordneten Sendelaser 91 an. Das Licht dieses Sendelasers 91 und das Licht dieser Spektrallinie werden in einem optischen Richtkoppler 93 überlagert und in dieser Form dem Heterodynempfänger 94 zur Verarbeitung zugeleitet, wobei vom Heterodynempfänger 94 aus eine Frequenzregelung des Sendelasers 91 über eine Frequenzregelung 92 erfolgt.

**Patentansprüche**

1. Optischer Kammgenerator (100) zum Erzeugen eines Kammspektrums aus bei äquidistanten optischen Frequenzen liegenden Spektrallinien (10, 11, 12, 13, ...) aus einer von einer kohärenten, eine bestimmte Kohärenzzeit ($\tau_k$) aufweisenden Referenzlichtquelle (1) erzeugten und bei einer bestimmten optischen Referenzfrequenz ($f_0$) liegenden Spektrallinie (10), mit einem ringförmig geschlossenen optischen Wellenleiter (2), in den das von der Referenzlichtquelle (1) abgegebene Licht der optischen Referenzfrequenz ($f_0$) einkoppelbar ist und aus dem ein Teil des in den Wellenleiter (2) eingekoppelten und im Wellenleiter (2) mit einer bestimmten Umlaufzeit (t) umlaufenden Lichts auskoppelbar ist und, einem im Wellenleiter (2) angeordneten Einseitenbandmodulator (3), der das im Wellenleiter (2) umlaufende Licht bei jedem Umlauf um eine bestimmte optische Frequenzverschiebung ($f_1$) versetzt, **dadurch gekennzeichnet,** daß der Einseitenbandmodulator (3) nur Seitenbänder mit gleichem Vorzeichen der Frequenzverschiebung ($f_1$) erzeugt, und daß der Betrag ($|f_1|$) der Freuquenzverschiebung ($f_1$)

derart gewählt ist, daß das Produkt ($|f_1|.\tau$) aus diesem Betrag ($|f_1|$) und der Umlaufzeit ($\tau$) des Lichts im Wellenleiter (2) gleich $\pi/2 + k\pi$ ist, wobei k eine beliebig wählbare ganze Zahl bedeutet, und/oder daß der Einseitenbandmodulator (3) Seitenbänder mit positiver und negativer Frequenzverschiebung ($f_1$, -$f_1$) erzeugt, und daß der Betrag ($|f_1|$) der Frequenzverschiebung $f_1$, -$f_1$) derart gewählt ist, daß das Produkt ($|f_1| . \tau$) aus diesem Betrag ($|f_1|$) und der Umlaufzeit ($\tau$) des Lichts im Wellenleiter (2) gleich $\pi/4 + k\pi$ ist, wobei k eine beliebig wählbare ganze Zahl ist.

2. Generator nach Anspruch 1, **dadurch gekennzeichnet,** daß die Länge des ringförmig geschlossenen Wellenleiters (2) so groß bemessen ist, daß die Umlaufzeit ($\tau$) des im Wellenleiter (2) umlaufenden Lichts größer als die bestimmte Kohärenzzeit ($\tau_k$) der kohärenten Referenzlichtquelle (1) ist,

3. Generator nach einem der vorhergehenden Ansprüche, **dadurch gekennzeichnet,** daß das im Wellenleiter (2) umlaufende Licht gesondert modulierbar ist.

4. Generator nach Anspruch 3, **dadurch gekennzeichnet,** daß im Wellenleiter (2) ein Phasenmodulator (7) angeordnet, mit welchem die Phase des umlaufenden Lichts gesondert phasenmodulierbar ist.

5. Generator nach Anspruch 3 oder 4, **dadurch gekennzeichnet,** daß die kohärente Referenzlichtquelle (1) frequenzmodulierbar ist.

EP 0 534 146 A2

# F I G 1

5

# FIG 2

# FIG 3

FIG 4